# FASCICULE DE BREVET EUROPEEN

(11) **EP 3 732 740 B1**
(45) Date de publication et mention de la délivrance du brevet: **01.11.2023**
(21) Numéro de dépôt: 18836370.9
(22) Date de dépôt: 21.12.2018
(51) Int. Cl.: H01M 10/6553, H01M 10/6556, H01M 10/643, H01M 10/613, H01M 50/152, H01M 50/167, H01M 50/536, H01M 50/548, H01M 50/559, H01M 50/56

(54) **COUVERCLE D'ELEMENT ELECTROCHIMIQUE A CONDUCTION THERMIQUE RENFORCEE**
DECKEL FÜR EIN ELEKTROCHEMISCHES ELEMENT MIT VERBESSERTER THERMISCHEN LEITFÄHIGKEIT
LID FOR AN ELECTROCHEMICIAL ELEMENT HAVING IMPROVED THERMAL CONDUCTIVITY

(30) Priorité: 27.12.2017 FR 1763248
(43) Date de publication de la demande: 04.11.2020
(73) Titulaire: SAFT, 92300 Lavallois-Perret (FR)
(72) Inventeur: NARBONNE, Alexandre, 33290 BLANQUEFORT (FR); RIGOBERT, Gérard, 33370 FARGUES St HILAIRE (FR); BERLUREAU, Thierry, 33300 BORDEAUX (FR); LEYKO, Matthieu, 33000 BORDEAUX (FR)
(74) Mandataire: Hirsch & Associés
(86) Numéro de dépôt international: PCT/EP2018/086711
(87) Numéro de publication internationale: WO 2019/129734

(56) Documents cités:
- EP-A1- 2 101 336
- CN-A- 102 867 936
- US-A- 6 013 388
- US-A1- 2004 131 932
- US-A1- 2006 203 429

## Description

### DOMAINE TECHNIQUE

Le domaine technique de l'invention est celui des composants utilisés dans la fabrication d'un élément électrochimique, et en particulier celui des couvercles utilisés pour fermer le conteneur d'un élément électrochimique.

### ETAT DE LA TECHNIQUE

Les termes « élément électrochimique » et « élément » seront utilisés dans ce qui suit de manière interchangeable.

Le fonctionnement d'un élément électrochimique conduit à une élévation de sa température et à un dégagement de chaleur dans l'air ambiant. Si cette chaleur n'est pas suffisamment dissipée par l'air ambiant, on peut observer un échauffement de l'élément qui va dégrader sa durée de vie. De nombreux dispositifs d'échanges de chaleur distincts de l'élément et placés à son contact ont été proposés afin d'évacuer la chaleur émise par celui-ci. Des dispositifs utilisant un fluide caloporteur circulant au contact de la paroi du conteneur de l'élément sont par exemple décrits dans les documents EP-A-1 261 065 et EP-A-1 746 672.

Le document EP-A-1 261 065 décrit un dispositif de régulation thermique utilisé pour contrôler la température d'éléments électrochimiques disposés dans un module batterie. Ce dispositif est constitué d'un tube à paroi mince fabriqué à partir d'un matériau souple ou rigide (plastique, etc.) qui est enroulé d'une manière telle qu'au moins une paroi du tube est en contact avec chaque élément. Le tube est rempli d'un fluide caloporteur qui agit comme un dissipateur thermique absorbant la chaleur des éléments pour les refroidir, ou à l'inverse comme source de chaleur pour réchauffer les éléments, si nécessaire. Chaque tube possède un port d'entrée et un port de sortie pour permettre au fluide de le traverser. Une pompe permet de régler le débit et la pression du fluide caloporteur à l'intérieur du tube.

Le document EP-A-1 746 672 décrit une poche souple comprenant plusieurs cloisons délimitant un chemin pour la circulation d'un fluide caloporteur. La poche est disposée au contact des parois des éléments d'un module batterie. La présence de zones d'interruption des cloisons permet un changement du sens de circulation du fluide caloporteur. Le fluide caloporteur effectue ainsi plusieurs passages au contact de tous les éléments. Ceci a pour avantage d'améliorer la dissipation de la chaleur.

US 6,013,388 décrit une borne de sortie de courant d'un élément électrochimique, la borne de sortie de courant ayant une structure conçue pour recevoir un conducteur thermique. La structure de réception du conducteur thermique peut comprendre un alésage défini par une surface intérieure de la borne de sortie de courant. Le conducteur thermique peut être un caloduc ou un autre conducteur approprié. Une couche d'isolation électrique peut être disposée entre la borne de sortie de courant et le conducteur thermique. La borne de sortie de courant conduit la chaleur produite par les électrodes de l'élément vers le conducteur thermique qui conduit ensuite la chaleur vers un dissipateur thermique.

EP-A-2 101 336 décrit un dispositif de stockage d'énergie comportant un élément de stockage électrique traversé par une conduite de passage d'un fluide de conditionnement thermique, un premier et second collecteurs formant les pôles positif et négatif du dispositif de stockage d'énergie, caractérisé en ce que la conduite est d'une longueur supérieure à celle de l'élément de stockage électrique et déborde de celui-ci à chacune de ses extrémités, et en ce que les pôles sont situés sur les faces opposées de l'élément de stockage électrique par lesquelles la conduite débouche.

L'utilisation de tels dispositifs, distincts des éléments, a pour inconvénient d'augmenter l'encombrement des éléments et donc du module les contenant. Il est en effet nécessaire de réserver un espace autour des éléments pour y faire passer le tube ou la poche contenant le fluide caloporteur. On cherche donc un dispositif d'évacuation de la chaleur de l'élément qui n'augmente pas l'encombrement de l'élément ou du module.

### RESUME DE L'INVENTION

A cet effet, l'invention a pour objet un élément électrochimique selon la revendication 1 et un procédé de réalisation d'une connexion électrique entre des électrodes de cet élément électrochimique et une borne de sortie de courant de l'élément, selon la revendication 9.

L'élément électrochimique objet de l'invention est caractérisé par la présence de la pièce de fermeture qui améliore la dissipation de la chaleur dans le sens de l'axe longitudinal du conteneur de l'élément. La pièce de fermeture est disposée sur l'extrémité du conteneur de l'élément et permet d'obtenir une très forte conductivité thermique. L'extrémité du conteneur de l'élément est utilisée comme surface de dissipation de la chaleur pour refroidir l'élément.

L'utilisation de la pièce de fermeture permet d'utiliser des échangeurs de chaleurs à très forte capacité d'échange par unité de surface. L'invention permet l'assemblage en module d'éléments de forte puissance ou de forte capacité de cyclage. Elle permet également la réalisation d'assemblages compacts d'éléments électrochimiques.

### DESCRIPTION DES FIGURES

La figure 1a représente une vue en coupe longitudinale d'une extrémité du conteneur d'un élément obturée par la pièce de fermeture selon un premier mode de réalisation comparatif. La coupe longitudinale passe par deux surfaces planes internes situées sur un diamètre de la pièce de fermeture.
La figure 1b représente une vue en coupe longitudinale d'une extrémité du conteneur d'un élément obturée par la pièce de fermeture selon le premier mode de réalisation comparatif. La coupe longitudinale passe par deux surfaces planes externes situées sur un diamètre de la pièce de fermeture.
La figure 2a représente une vue en coupe longitudinale d'une extrémité du conteneur d'un élément obturée par la pièce de fermeture selon un second mode de réalisation comparatif. La coupe passe par deux surfaces planes internes situées sur un diamètre de la pièce de fermeture. Un échangeur de chaleur est disposé sur une pièce de connexion électrique externe à l'élément, celle-ci reposant sur la pièce de fermeture.
La figure 2b représente une vue de la pièce de fermeture dans le second mode de réalisation comparatif selon un plan de coupe horizontal passant par l'épaisseur de la pièce.
La figure 3a représente une vue de dessus d'une pièce de fermeture selon l'invention.
La figure 3b représente une vue de la pièce de fermeture selon l'invention selon le plan de coupe défini par la direction A-A' de la figure 3a.
La figure 4a est une représentation d'une extrémité du conteneur d'un élément obturée par la pièce de fermeture dans un quatrième mode de réalisation.
La figure 4b est une vue interne de la pièce de fermeture de la figure 4a.
La figure 5 est une représentation schématique d'une connexion électrique entre deux éléments électrochimiques de l'art antérieur.
La figure 6 est une représentation schématique d'une connexion électrique entre deux éléments électrochimiques selon l'invention.

### EXPOSE DE MODES DE REALISATION

L'élément électrochimique objet de l'invention est caractérisé par la présence d'une pièce de fermeture présentant une géométrie particulière.

La pièce de fermeture comprend une ou plusieurs surfaces planes internes orientées vers l'intérieur du conteneur. Chaque surface plane interne sert de surface de soudure entre la pièce de fermeture et un collecteur de courant. La partie plane de chaque surface plane interne permet la réalisation d'une soudure directement entre la pièce de fermeture et un collecteur de courant, c'est-à-dire sans avoir à utiliser une pièce de connexion électrique interne intermédiaire. Cette soudure est de préférence réalisée par laser. Le nombre de surfaces planes internes n'est pas particulièrement limité et peut aller de 1 à 20, de 2 à 10 ou de 4 à 6. Selon l'invention, les seules surfaces de soudure entre la pièce de fermeture et le collecteur de courant sont constituées par la ou les surfaces planes internes.

La pièce de fermeture comprend une ou plusieurs surfaces planes externes orientées vers l'extérieur du conteneur. La ou les surfaces planes externes ne sont pas en contact physique avec un collecteur de courant. L'ensemble des surfaces planes externes constitue l'une des deux bornes de l'élément électrochimique et agit comme surface de refroidissement de l'élément. L'ensemble des surfaces planes externes peut servir de support à un échangeur de chaleur optionnel qui améliore davantage le refroidissement de l'élément.

Une surface plane interne est raccordée à une surface plane externe par une cloison. Celle-ci forme un angle allant de 70 à 120°, de préférence allant de 80 à 100°, de préférence voisin de 90° par rapport à l'une des deux surfaces planes.

La géométrie spécifique de la pièce de fermeture permet à la fois de collecter le courant venant des électrodes et de conduire efficacement la chaleur vers l'extérieur, par exemple vers un échangeur de chaleur. L'efficacité de la dissipation de la chaleur par la pièce de fermeture est proportionnelle à la surface traversée par le flux de chaleur. La somme des aires des surfaces perpendiculaires à la direction du flux de chaleur constitue un indicateur de l'efficacité de la dissipation de la chaleur. La somme de ces aires est dénommée dans ce qui suit « aire de la surface de conduction thermique ». Cette aire peut être augmentée, par exemple en augmentant l'épaisseur des cloisons, leur nombre ou leur longueur. De plus, les cloisons peuvent présenter une épaisseur suffisamment importante pour y intégrer un échangeur de chaleur.

La pièce de fermeture peut être fabriquée par emboutissage ou par frappe à froid d'une feuille métallique plane, par moulage ou par impression en trois dimensions. La pièce de fermeture est généralement le couvercle d'un élément électrochimique mais on peut envisager qu'elle soit constituée par le fond du conteneur, et ne serait dans ce cas pas détachable du conteneur, comme l'est un couvercle.

Le format du conteneur de l'élément n'est pas particulièrement limité. Il est généralement de format cylindrique ou parallélépipédique. Néanmoins, d'autres formats sont envisageables. La pièce de fermeture sera généralement disposée dans un plan perpendiculaire à la direction définie par la dimension la plus grande du conteneur. Le conteneur peut être fait d'un matériau métallique ou d'un matériau isolant électrique, tel que le plastique, ou d'un matériau métallique recouvert d'une feuille d'un matériau isolant électrique.

La pièce de fermeture est bien adaptée à la dissipation de la chaleur émise par des éléments étanches, tels que des éléments lithium-ion. Ceux-ci génèrent une grande quantité d'énergie lorsqu'ils fonctionnent en charge ou en décharge sous fort courant, comme cela est le cas dans des véhicules à propulsion hybride par moteur thermique et moteur électrique.

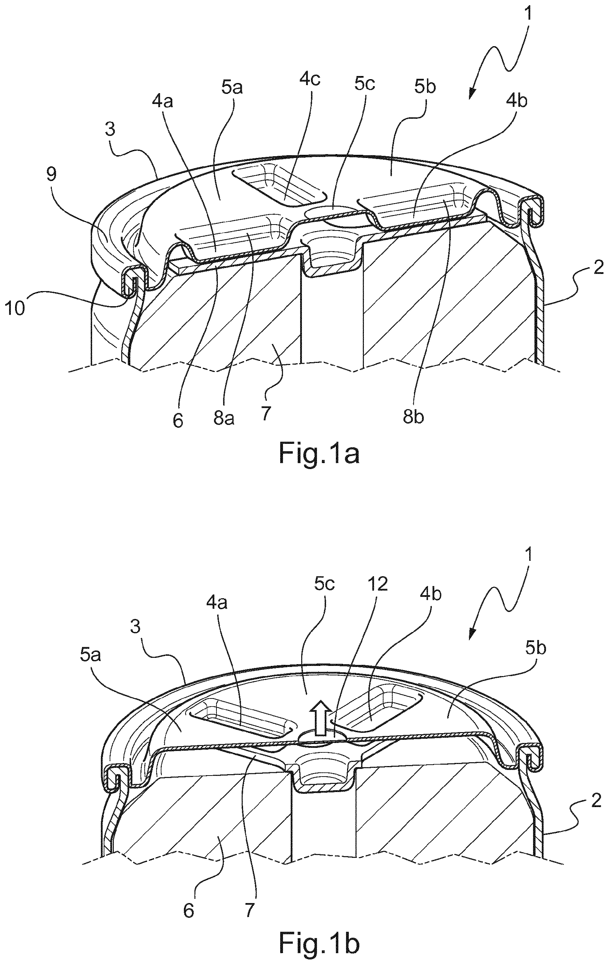

La figure 1a représente une vue en coupe longitudinale d'une extrémité du conteneur cylindrique (2) d'un élément électrochimique (1) obturée par une pièce de fermeture cylindrique (3). La pièce de fermeture (3) comprend quatre surfaces planes internes, dont trois sont représentées (4a, 4b, 4c), et cinq surfaces planes externes, dont trois sont représentées (5a, 5b, 5c). Les quatre surfaces planes internes sont régulièrement réparties sur la pièce de fermeture et forment une croix. Chaque surface plane interne constitue une surface de soudure avec un collecteur de courant (6) disposé sous la pièce de fermeture. Le collecteur de courant est connecté électriquement aux électrodes d'une même polarité du faisceau électrochimique (7). L'ensemble formé par les surfaces planes externes forme une borne de sortie de courant. Les surfaces planes internes (4a, 4b) sont raccordées aux surfaces planes externes (5a, 5b) par des cloisons (8a, 8b). L'alternance de surfaces planes internes et de surfaces planes externes raccordées par des cloisons confère à la pièce de fermeture un aspect de tôle ondulée. La partie périphérique (9) de la pièce de fermeture est sertie sur l'extrémité recourbée de la paroi du conteneur (10) rendant ainsi le conteneur de l'élément étanche.

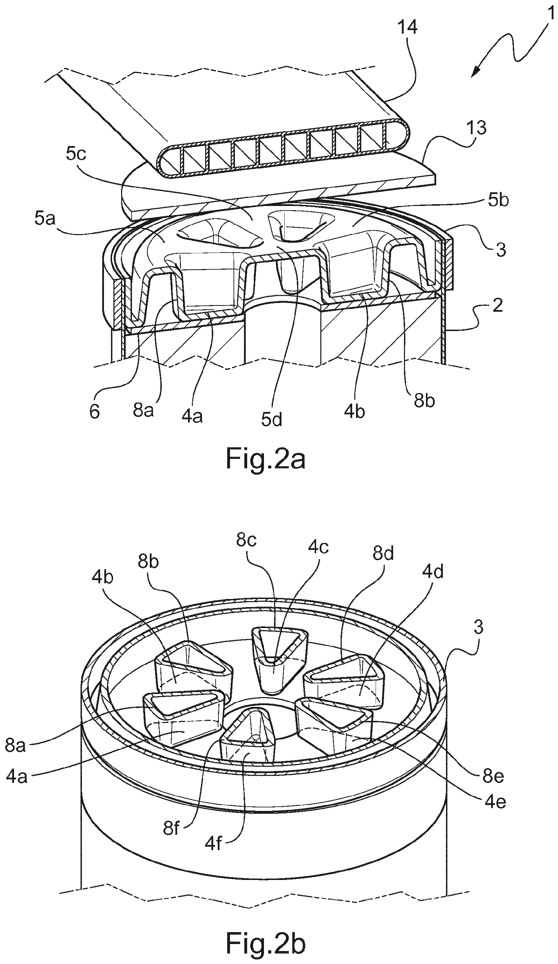

La figure 1b représente une vue en coupe longitudinale de l'extrémité du conteneur (2) de l'élément (1) obturée par la pièce de fermeture (3). La coupe longitudinale passe par deux surfaces planes externes (5a, 5b) situées sur un diamètre de la pièce de fermeture. Cette figure montre que le collecteur de courant (6) a une forme de croix qui suit la direction dans laquelle s'étendent les surfaces planes internes (4a, 4b). La surface plane externe (5c) située au centre de la pièce de fermeture peut être évidée et l'ouverture ainsi créée peut servir de logement à un dispositif de sécurité tel qu'une soupape (12) permettant l'évacuation de gaz en cas de surpression à l'intérieur du conteneur. La figure 2a représente une vue en coupe longitudinale d'une extrémité du conteneur cylindrique (2) d'un élément électrochimique (1) obturée par une pièce de fermeture cylindrique (3). Les surfaces planes internes sont au nombre de six et sont en forme de triangle. Elles sont régulièrement réparties sur la surface de la pièce de fermeture. Seules deux surfaces planes internes (4a, 4b) sont visibles. Chaque surface plane interne sert de surface de soudure de la pièce de fermeture au collecteur de courant (6). Chaque surface plane interne est directement soudée au collecteur de courant. Des surfaces planes externes (5a, 5b, 5c) se situent entre les surfaces planes internes et au centre de la pièce de fermeture (Sd). Elles ne sont pas en contact physique avec le collecteur de courant. Elles servent de support à une pièce de connexion électrique externe (13). Cette pièce sert de support à un échangeur de chaleur (14). Les surfaces planes externes (5a, 5b, 5c, 5d) sont raccordées aux surfaces planes internes (4a, 4b) par des cloisons (8a, 8b, 8c) de direction sensiblement verticale.

La figure 2b représente une vue d'une pièce de fermeture (3) selon un plan de coupe horizontal passant par l'épaisseur de la pièce. Cette figure montre six ensembles (8a-8f) de cloisons disposées en triangle. Chaque ensemble de cloisons raccorde une surface plane externe, non visible sur la figure 2b, à une surface plane interne (4a-4f). Les limites de chaque surface plane interne sont représentées en pointillés. Comme expliqué ci-avant, une amélioration de la dissipation de la chaleur est obtenue en augmentant le nombre des cloisons, leur épaisseur ou leur longueur. Sur la figure 2b, l'aire de la surface de conduction thermique est représentée par des hachures.

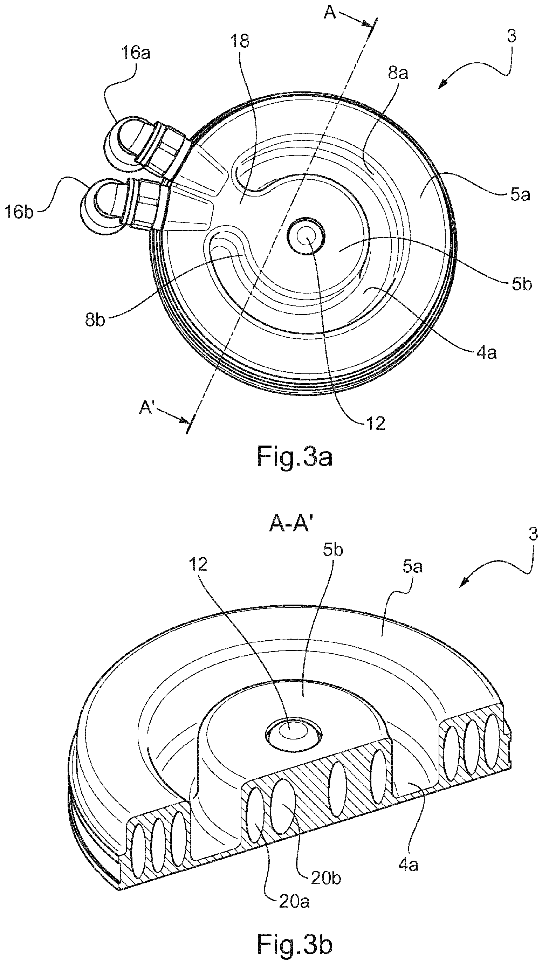

L'invention est décrite dans ce qui suit en référence aux figures 3a à 3b. La figure 3a montre une vue de dessus d'une pièce de fermeture (3) de forme circulaire. Celle-ci comprend une première surface externe (5a) située sur la partie périphérique de la pièce de fermeture et une seconde surface externe (5b) située sur la partie centrale de la pièce de fermeture. Les deux surfaces externes présentent une forme de portion de couronne circulaire. Elles sont séparées par une surface interne (4a) présentant également une forme de portion de couronne circulaire. La première surface externe (5a) est raccordée à la surface interne (4a) par une cloison (8a). L'épaisseur de la cloison (8a) s'étend sur toute la largeur de la première surface externe (5a). De même, la seconde surface externe (5b) est raccordée à la surface interne (4a) par une cloison (8b). L'épaisseur de la cloison (8b) s'étend sur toute la largeur de la seconde surface externe (5b). L'épaisseur des cloisons (8a, 8b) est suffisante pour permettre la circulation d'un fluide caloporteur à travers celles-ci. Deux conduits (16a, 16b) assurent l'entrée et la sortie du fluide caloporteur. Un canal (18) permet au fluide caloporteur de circuler de la partie périphérique à la partie centrale ou inversement. La pièce de fermeture est munie en son centre d'un dispositif de sécurité (12).

La figure 3b est une vue de la pièce de fermeture (3) selon un plan de coupe passant par l'axe A-A' de la figure 3a. Elle montre que chaque cloison (8) est subdivisée en plusieurs compartiments (20a, 20b). Chaque compartiment est adapté à la circulation d'un fluide caloporteur à travers celui-ci.

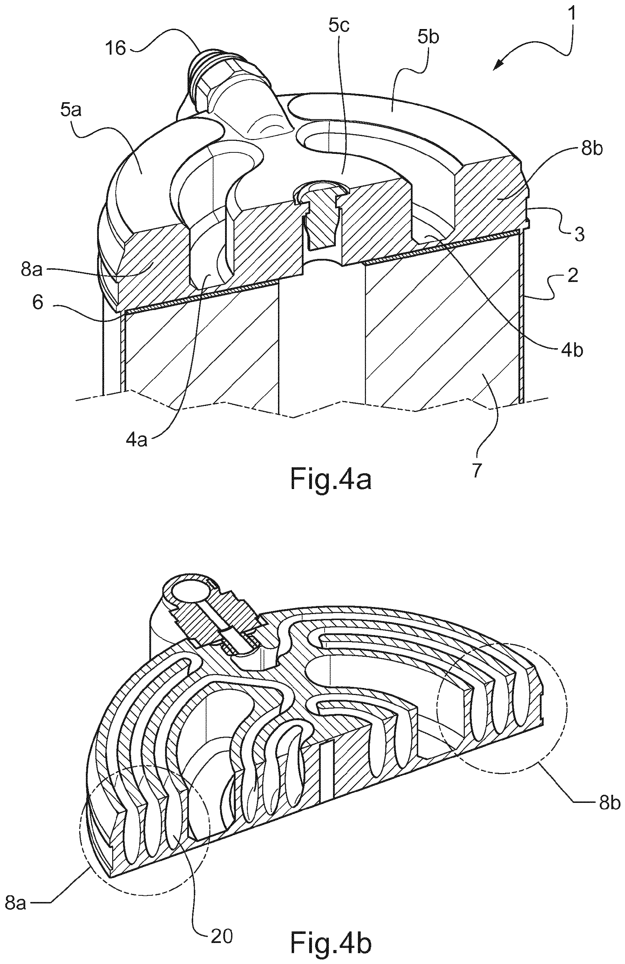

Un **quatrième** mode de réalisation est décrit dans ce qui suit en référence aux figures 4a à 4b. Dans ce mode de réalisation, la dissipation de la chaleur est encore améliorée par une augmentation de l'aire de la surface de conduction thermique et un échangeur de chaleur est intégré dans la pièce de fermeture. La figure 4a représente une vue en coupe longitudinale d'une extrémité du conteneur cylindrique (2) d'un élément électrochimique (1) obturée par une pièce de fermeture (3). Le nombre de surfaces planes internes est de deux (4a, 4b). Celles-ci sont en forme de portion de couronne circulaire. Chaque surface plane interne constitue une surface de soudure avec un collecteur de courant (6) disposé sous la pièce de fermeture. Le collecteur de courant est connecté électriquement aux électrodes d'une même polarité du faisceau électrochimique (7). La figure 4a montre trois surfaces planes externes (5a, 5b, 5c) dont l'ensemble sert de borne de l'élément. La surface externe (5a) est raccordée à la surface interne (4a) par une cloison (8a). L'épaisseur de la cloison (8a) s'étend sur toute la largeur de la surface externe (5a). De même, la surface externe (5b) est raccordée à la surface interne (4b) par une cloison (8b). L'épaisseur de la cloison (8b) s'étend sur toute la largeur de la surface externe (5b). Un conduit (16) permet l'introduction d'un fluide caloporteur.

L'épaisseur des cloisons (8a) et (8b) est suffisamment importante pour y intégrer un échangeur de chaleur. Cet échangeur est intégré à la partie inférieure de la pièce de fermeture, comme le montre la figure 4b. Chaque cloison est subdivisée en plusieurs compartiments (20) permettant la circulation d'un fluide caloporteur. Un couvercle formant la partie supérieure de la pièce de fermeture se superpose sur la partie inférieure pour former la pièce de fermeture telle que représentée à la figure 4a.

### EXEMPLES

### 1) Résistance thermique de la chaîne des pièces mécaniques reliant un faisceau électrochimique à un échangeur de chaleur dans le cas d'éléments électrochimiques de l'art antérieur :

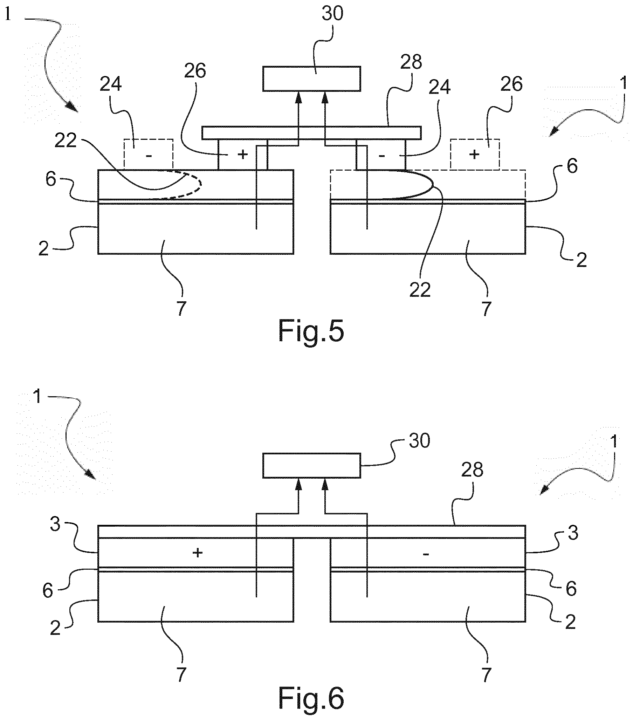

La résistance thermique de la chaîne des pièces mécaniques reliant un faisceau électrochimique à un échangeur de chaleur dans le cas d'éléments électrochimiques de l'art antérieur a été calculée. Le calcul est basé sur la connexion de deux éléments électrochimiques de l'art antérieur selon une configuration telle que schématisée à la figure 5. Chaque élément (1) comprend un faisceau électrochimique (7) inséré dans un conteneur (2). Les extrémités des feuillards des électrodes dépassant du haut du faisceau électrochimique sont connectées à un collecteur de courant (6). Le collecteur de courant est connecté à une pièce de connexion interne (22). La pièce de connexion interne relie électriquement le collecteur de courant à une borne de sortie de courant (24, 26). Une barrette métallique (28), encore dénommée « busbar » en anglais, sert à la connexion en série des deux éléments. La barrette métallique est en contact avec un échangeur de chaleur (30). Le tableau 1 ci-dessous indique les paramètres utilisés pour le calcul.

**Tableau 1**

| Caractéristique | Unité | Conteneur en aluminium | Borne positive en aluminium | Barrette métallique en cuivre | Borne négative en cuivre | Pièce de connexion interne en cuivre |
|---|---|---|---|---|---|---|
| Conductivité thermique (λ) | W/(m.K) | 204 | 204 | 384 | 387 | 384 |
| Longueur (L) | mm | 15 | 7,8 | 33 | 14,6 | 60 |
| Aire de la surface de conduction thermique (A) | mm2 | 119 | 134,3 | 54,0 | 75,4 | 14,4 |
| Résistance thermique (R)* | K.W⁻¹ | **0,62** | **0,28** | **1,59** | **0,50** | **10,85** |

| | | | | | | |
|---|---|---|---|---|---|---|
| *Résistance thermique P=L/(λ×A) | | | | | | |

La résistance thermique moyenne est (0,62+0,28+1,59+0,5+10,85)/2 soit **6,93** K.W⁻¹.

### 2) Résistance thermique de la chaîne des pièces mécaniques reliant un faisceau électrochimique à un échangeur de chaleur dans le cas d'éléments électrochimiques selon l'invention :

La résistance thermique de la chaîne des pièces mécaniques reliant un faisceau électrochimique à un échangeur de chaleur dans le cas d'éléments électrochimiques selon l'invention a été calculée. Le calcul est basé sur la connexion de deux éléments électrochimiques selon une configuration telle que schématisée à la figure 6. Chaque élément (1) comprend un faisceau électrochimique (7) inséré dans un conteneur (2). Les extrémités des feuillards des électrodes dépassant du haut du faisceau électrochimique sont connectées à un collecteur de courant (6). Le collecteur de courant est soudé directement à un couvercle (3) qui est la pièce de fermeture et dont les surfaces planes externes constituent l'une des deux bornes de sortie de courant de l'élément. Les deux éléments ne comprennent pas de pièce de connexion interne (22), contrairement à la configuration de la figure 5. La ou les surfaces internes de la pièce de fermeture remplacent cette pièce de connexion interne. Une barrette métallique (28) sert à la connexion en série des deux éléments. La barrette métallique est en contact avec un échangeur de chaleur (30). Le tableau 2 ci-dessous indique les paramètres utilisés pour le calcul.

**Tableau 2**

| Caractéristique | Unité | Borne positive en aluminium | Barrette métallique en cuivre | Borne négative en aluminium | Borne négative en cuivre |
|---|---|---|---|---|---|
| Conductivité thermique (λ) | W/(m.K) | 204 | 384 | 204 | 384 |
| Longueur (L) | mm | 6 | 33 | 6 | 6 |
| Aire de la surface de conduction thermique (A) | mm2 | 555 | 54,0 | 555 | 555 |
| Résistance thermique (R) | K.W⁻¹ | **0,05** | **1,59** | **0,05** | **0,028** |

La résistance thermique moyenne est (0,05+1,59+0,05)/2 soit **0,85** K.W⁻¹ dans le cas d'une borne négative en aluminium. Elle est de **0,84** K.W⁻¹ dans le cas d'une borne négative en cuivre. Ces deux valeurs sont environ 8 fois plus faibles que la valeur obtenue pour le montage des éléments selon l'art antérieur. L'élément selon l'invention évacue donc nettement mieux la chaleur qu'un élément selon l'art antérieur.

### 3) Résistance thermique d'un élément électrochimique selon le mode de réalisation illustré aux figures 4a et 4b:

La résistance thermique d'un élément électrochimique comprenant une pièce de fermeture selon le mode de réalisation illustré aux figures 4a et 4b et dont l'aire de la surface de conduction thermique est de 1490 mm² a été estimée à 0,033 K.W⁻¹. Le tableau 3 ci-dessous indique les paramètres utilisés pour cette évaluation.

**Tableau 3**

| Caractéristique | Unité | Borne positive en aluminium |
|---|---|---|
| Conductivité thermique (λ) | W/(m.K) | 204 |
| Longueur (L) | mm | 1 |
| Aire de la surface de conduction thermique (A) | mm2 | 1490 |
| Résistance thermique (R) | K.W⁻¹ | **0,0033** |

La résistance thermique obtenue est de 0,0033 K.W⁻¹, ce qui est nettement inférieur à la valeur de 6,96 K.W⁻¹ de l'exemple de l'art antérieur. Ce mode de réalisation permet donc de réduire davantage la résistance thermique entre le faisceau électrochimique et l'échangeur de chaleur.

## Revendications

1. Elément électrochimique (1) comprenant :
a) un conteneur (2) comportant une ouverture permettant l'introduction d'au moins un faisceau électrochimique (7) ;
b) une pièce de fermeture (3) du conteneur présentant :
i) une surface plane interne (4a) orientée vers l'intérieur du conteneur, pouvant être connectée électriquement directement à un collecteur de courant (6),
ii) une partie centrale et une partie périphérique comprenant chacune une surface plane externe (5a, 5b) orientée vers l'extérieur du conteneur, pouvant servir de borne de l'élément électrochimique, et ayant une forme de secteur circulaire ou de portion de couronne circulaire lorsqu'elle est vue selon une direction normale à la surface plane externe ;
la partie centrale et la partie périphérique étant séparées par la surface plane interne,
iii) une première cloison (8a) raccordant la surface plane interne (4a) à la surface plane externe (5a) de la partie périphérique, ladite cloison formant un angle allant de 70 à 120° par rapport à la surface plane interne (4a) ou par rapport à la surface plane externe (5a) de la partie périphérique,
une seconde cloison (8b) raccordant la surface plane interne (4a) à la surface plane externe (5b) de la partie centrale, ladite cloison formant un angle allant de 70 à 120° par rapport à la surface plane interne (4a) ou par rapport à la surface plane externe (5b) de la partie centrale,
lesdites première et seconde cloisons présentant une épaisseur et cette épaisseur est adaptée à la circulation d'un fluide caloporteur à travers celles-ci, l'épaisseur des cloisons étant subdivisée en plusieurs compartiments (20a, 20b), chaque compartiment étant adapté à la circulation d'un fluide caloporteur à travers le compartiment,
iv) un canal (18) pour la circulation d'un fluide caloporteur de la partie périphérique à la partie centrale ou inversement.

2. Elément électrochimique selon la revendication 1, dans lequel ladite au moins une surface plane interne a une forme de secteur circulaire lorsqu'elle est vue selon une direction normale à la surface plane interne.

3. Elément électrochimique selon la revendication 1, dans lequel ladite au moins une surface plane interne a une forme de portion de couronne circulaire lorsqu'elle est vue selon une direction normale à la surface plane interne.

4. Elément électrochimique selon l'une quelconque des revendications précédentes, de type lithium-ion.

5. Elément électrochimique selon l'une des revendications précédentes, dans lequel la zone de contact entre la pièce de fermeture du conteneur et le conteneur définit un plan de fermeture, lequel plan de fermeture est perpendiculaire à la direction définie par la dimension la plus grande du conteneur.

6. Elément électrochimique selon l'une des revendications précédentes, dans lequel la surface plane interne est connectée électriquement directement à un collecteur de courant des électrodes d'une polarité donnée du faisceau électrochimique.

7. Elément électrochimique selon l'une des revendications précédentes, dans lequel l'une des bornes de l'élément électrochimique est constituée par les surfaces planes externes (5a, 5b) de la pièce de fermeture.

8. Elément électrochimique selon l'une des revendications précédentes, dans lequel le conteneur est de format cylindrique ou prismatique.

9. Procédé de réalisation d'une connexion électrique entre des électrodes d'un élément électrochimique (1) et une borne de sortie de courant de l'élément, ledit procédé comprenant les étapes de :
- mise à disposition d'un conteneur (2),
- introduction d'un faisceau électrochimique (7) dans le conteneur,
- mise en place sur le conteneur d'une pièce de fermeture (3) présentant :
i) une surface plane interne (4a) orientée vers l'intérieur du conteneur, pouvant être connectée électriquement directement à un collecteur de courant (6) de l'élément électrochimique et
ii) une partie centrale et une partie périphérique comprenant chacune une surface plane externe (5a, 5b) orientée vers l'extérieur du conteneur, pouvant servir de borne de l'élément électrochimique, et ayant une forme de secteur circulaire ou de portion de couronne circulaire lorsqu'elle est vue selon une direction normale à la surface plane externe ;
la partie centrale et la partie périphérique étant séparées par la surface plane interne,
iii) une première cloison (8a) raccordant la surface plane interne (4a) à la surface plane externe (5a) de la partie périphérique, ladite cloison formant un angle allant de 70 à 120°, par rapport à la surface plane interne (4a) ou par rapport à la surface plane externe (5a) de la partie périphérique,
une seconde cloison (8b) raccordant la surface plane interne (4a) à la surface plane externe (5b) de la partie centrale, ladite cloison formant un angle allant de 70 à 120°, par rapport à la surface plane interne (4a) ou par rapport à la surface plane externe (5b) de la partie centrale,
lesdites première et seconde cloisons présentant une épaisseur, cette épaisseur étant adaptée à la circulation d'un fluide caloporteur à travers celles-ci, l'épaisseur des cloisons étant subdivisée en plusieurs compartiments (20a, 20b), chaque compartiment étant adapté à la circulation d'un fluide caloporteur à travers le compartiment,
iv) un canal (18) pour la circulation d'un fluide caloporteur de la partie périphérique à la partie centrale ou inversement ;
- réalisation d'une connexion électrique entre la ou les surfaces planes internes de la pièce de fermeture et un collecteur de courant des électrodes d'une polarité donnée du faisceau électrochimique.

10. Procédé selon la revendication 9, dans lequel, la connexion électrique est effectuée par soudage laser.

## Patentansprüche

1. Elektrochemische Zelle (1), die Folgendes umfasst:
a) einen Behälter (2), der eine Öffnung umfasst, welche die Einführung mindestens eines elektrochemischen Strahls (7) ermöglicht;
b) ein Verschlussteil (3) des Behälters, das Folgendes aufweist:
i) eine innere ebene Fläche (4a), die in Richtung des Inneren des Behälters ausgerichtet ist und direkt elektrisch mit einem Stromkollektor (6) verbunden werden kann,
ii) einen mittleren Teil und einen umlaufenden Teil, die jeweils eine äußere ebene Fläche (5a, 5b) umfassen, die in Richtung des Äußeren des Behälters ausgerichtet ist, als Anschluss der elektrochemischen Zelle dienen kann und entlang einer Richtung normal zur äußeren ebenen Fläche betrachtet eine Form eines kreisförmigen Sektors oder eines kreisförmigen Kranzabschnitts aufweist;
wobei der mittlere Teil und der umlaufende Teil durch die innere ebene Fläche getrennt sind,
iii) eine erste Trennwand (8a), welche die innere ebene Fläche (4a) an die äußere ebene Fläche (5a) des umlaufenden Teils anschließt, wobei die Trennwand einen Winkel von zwischen 70 und 120° in Bezug auf die innere ebene Fläche (4a) oder in Bezug auf die äußere ebene Fläche (5a) des umlaufenden Teils bildet,
eine zweite Trennwand (8b), welche die innere ebene Fläche (4a) an die äußere ebene Fläche (5b) des mittleren Teils anschließt, wobei die Trennwand einen Winkel von zwischen 70 und 120° in Bezug auf die innere ebene Fläche (4a) oder in Bezug auf die äußere ebene Fläche (5b) des mittleren Teils bildet,
wobei die erste und die zweite Trennwand eine Dicke aufweisen und diese Dicke für den Umlauf eines Wärmeübertragungsfluids durch diese hindurch angepasst ist, wobei die Dicke der Trennwände in mehrere Abteile (20a, 20b) unterteilt ist und jedes Abteil für den Umlauf eines Wärmeübertragungsfluids durch das Abteil angepasst ist,
iv) einen Kanal (18) für den Umlauf eines Wärmeübertragungsfluids vom umlaufenden Teil zum mittleren Teil oder umgekehrt.

2. Elektrochemische Zelle nach Anspruch 1, wobei die mindestens eine innere ebene Fläche entlang einer Richtung normal zur inneren ebenen Fläche betrachtet eine Form eines kreisförmigen Sektors aufweist.

3. Elektrochemische Zelle nach Anspruch 1, wobei die mindestens eine innere ebene Fläche entlang einer Richtung normal zur inneren ebenen Fläche eine Form eines kreisförmigen Kranzabschnitts aufweist.

4. Elektrochemische Zelle nach einem der vorhergehenden Ansprüche des Typen Lithium-Ionen.

5. Elektrochemische Zelle nach einem der vorhergehenden Ansprüche, wobei die Kontaktzone zwischen dem Verschlussteil des Behälters und dem Behälter eine Verschlussebene definiert, wobei die Verschlussebene senkrecht zu der durch die größte Abmessung des Behälters definierten Richtung ist.

6. Elektrochemische Zelle nach einem der vorhergehenden Ansprüche, wobei die innere ebene Fläche direkt elektrisch mit einem Stromkollektor der Elektroden mit einer gegebenen Polarität des elektrochemischen Strahls verbunden ist.

7. Elektrochemische Zelle nach einem der vorhergehenden Ansprüche, wobei einer der Anschlüsse der elektrochemischen Zelle aus den äußeren ebenen Flächen (5a, 5b) des Verschlussteils besteht.

8. Elektrochemische Zelle nach einem der vorhergehenden Ansprüche, wobei der Behälter ein zylindrisches oder prismatisches Format aufweist.

9. Verfahren zur Herstellung einer elektrischen Verbindung zwischen Elektroden einer elektrochemischen Zelle (1) und einem Stromausgangsanschluss des Elements, wobei das Verfahren die folgenden Schritte umfasst:
- Bereitstellen eines Behälters (2),
- Einführen eines elektrochemischen Strahls (7) in den Behälter,
- Einrichten eines Verschlussteils (3), das Folgendes aufweist, auf dem Behälter:
i) eine innere ebene Fläche (4a), die in Richtung des Inneren des Behälters ausgerichtet ist und direkt elektrisch mit einem Stromkollektor (6) der elektrochemischen Zelle verbunden werden kann, und
ii) einen mittleren Teil und einen umlaufenden Teil, die jeweils eine äußere ebene Fläche (5a, 5b) umfassen, die in Richtung des Äußeren des Behälters ausgerichtet ist, als Anschluss der elektrochemischen Zelle dienen kann und entlang einer Richtung normal zur äußeren ebenen Fläche betrachtet eine Form eines kreisförmigen Sektors oder eines kreisförmigen Kranzabschnitts aufweist;
wobei der mittlere Teil und der umlaufende Teil durch die innere ebene Fläche getrennt sind,
iii) eine erste Trennwand (8a), welche die innere ebene Fläche (4a) an die äußere ebene Fläche (5a) des umlaufenden Teils anschließt, wobei die Trennwand einen Winkel von zwischen 70 und 120° in Bezug auf die innere ebene Fläche (4a) oder in Bezug auf die äußere ebene Fläche (5a) des umlaufenden Teils bildet,
eine zweite Trennwand (8b), welche die innere ebene Fläche (4a) an die äußere ebene Fläche (5b) des mittleren Teils anschließt, wobei die Trennwand einen Winkel von zwischen 70 und 120° in Bezug auf die innere ebene Fläche (4a) oder in Bezug auf die äußere ebene Fläche (5b) des mittleren Teils bildet,
wobei die erste und die zweite Trennwand eine Dicke aufweisen, diese Dicke für den Umlauf eines Wärmeübertragungsfluids durch diese hindurch angepasst ist, die Dicke der Trennwände in mehrere Abteile (20a, 20b) unterteilt ist und jedes Abteil für den Umlauf eines Wärmeübertragungsfluids durch das Abteil angepasst ist,
iv) einen Kanal (18) für den Umlauf eines Wärmeübertragungsfluids vom umlaufenden Teil zum mittleren Teil oder umgekehrt;
- Herstellen einer elektrischen Verbindung zwischen der oder den inneren ebenen Flächen des Verschlussteils und einem Stromkollektor der Elektroden mit einer gegebenen Polarität des elektrochemischen Strahls.

10. Verfahren nach Anspruch 9, wobei die elektrische Verbindung durch Laserschweißen durchgeführt wird.

## Claims

1. An electrochemical cell (1) comprising:
a) a container (2) having an opening for introducing at least one electrode plate group (7);
b) a closure part (3) for the container having:
i) an inner planar surface (4a) directed towards the interior of the container, able to be directly connected electrically to a current collector (6) of the electrochemical cell, and,
ii) a central portion and a peripheral portion, each comprising an outer surface (5a, 5b) directed towards the outside of the container and capable of serving as a terminal of the electrochemical cell, and having a circular sector or circular crown portion shape when viewed in a direction normal to the outer planar surface,
the peripheral portion and the central portion being separated by the inner planar surface
iii) a first partition (8a) connecting said inner planar surface (4a) to said outer planar surface (5a) of the peripheral portion, said partition forming an angle ranging from 70° to 120°, with respect to the inner planar surface (4a) or the outer planar surface (5a) of the peripheral portion,
a second partition (8b) connecting said inner planar surface (4a) to said outer planar surface (5b) of the peripheral portion, said partition forming an angle ranging from 70° to 120°, with respect to the inner planar surface (4a) or the outer planar surface (5b) of the central portion,
wherein said first and second partitions have a thickness, and this thickness is suitable for the circulation of a heat-transfer fluid therethrough, wherein the thickness of the partitions is subdivided into several compartments (20a, 20b) and each compartment is adapted to the circulation of a heat-transfer fluid therethrough,
(iv) a channel (18) for circulating a heat-transfer fluid from the peripheral portion to the central portion or vice versa.

2. The electrochemical cell according to claim 1, wherein said at least one inner planar surface has a circular sector shape when viewed in a direction normal to the inner planar surface.

3. The electrochemical cell according to claim 1, wherein said at least one inner planar surface has a circular crown portion shape when viewed in a direction normal to the inner planar surface.

4. The electrochemical cell according to any one of the preceding claims, of the lithium-ion type.

5. The electrochemical cell according to one of the preceding claims, wherein the contact area between the closure part for the container and the container defines a closure plane, which closure plane is perpendicular to the direction defined by the largest dimension of the container.

6. The electrochemical cell according to one of the preceding claims, in which the inner planar surface is electrically connected directly to a current collector of the electrodes of a given polarity of the electrode plate group.

7. The electrochemical cell according to one of the preceding claims, wherein one of the terminals of the electrochemical cell is constituted by the outer planar surfaces (5a, 5b) of the closure part.

8. The electrochemical cell according to one of the preceding claims, in which the container is of cylindrical or prismatic format.

9. A method for producing an electrical connection between electrodes of an electrochemical cell (1) and a current output terminal of the cell, said method comprising the steps of:
providing a container (2),
introducing an electrode plate group (7) into the container,
placing a closure part (3) on the container said closure part having:
i) an inner planar surface (4a) directed towards the interior of the container, able to be directly connected electrically to a current collector (6) of the electrochemical cell, and,
ii) a central portion and a peripheral portion, each comprising an outer surface (5a, 5b) directed towards the outside of the container and capable of serving as a terminal of the electrochemical cell, and having a circular sector or circular crown portion shape when viewed in a direction normal to the outer planar surface,
the peripheral portion and the central portion being separated by the inner planar surface,
iii) a first partition (8a) connecting said inner planar surface (4a) to said outer planar surface (5a) of the peripheral portion, said partition forming an angle ranging from 70° to 120°, with respect to the inner planar surface (4a) or the outer planar surface (5a) of the peripheral portion,
a second partition (8b) connecting said inner planar surface (4a) to said outer planar surface (5b) of the peripheral portion, said partition forming an angle ranging from 70° to 120°, with respect to the inner planar surface (4a) or the outer planar surface (5b) of the central portion,
wherein said first and second partitions have a thickness, and this thickness is suitable for the circulation of a heat-transfer fluid therethrough, wherein the thickness of the partitions is subdivided into several compartments (20a, 20b) and each compartment is adapted to the circulation of a heat-transfer fluid therethrough,
(iv) a channel (18) for circulating a heat-transfer fluid from the peripheral portion to the central portion or vice versa,
producing an electrical connection between the at least one inner planar surface of the closure part and a current collector of the electrodes of a given polarity of the electrode plate group.

10. The method according to claim 9, wherein the electrical connection is carried out by laser welding.
